# EUROPEAN PATENT SPECIFICATION

(11) **EP 2 458 967 B1**
(45) Date of publication and mention of the grant of the patent: **09.11.2016**
(21) Application number: 10736665.0
(22) Date of filing: 19.07.2010
(51) Int. Cl.: A01F 15/08, A01F 15/10, B30B 9/30

(54) **A BALER WITH A FRICTION SENSOR**
BALLENPRESSER MIT REIBUNGSSENSOR
RAMASSEUSE-PRESSE À BALLES AVEC CAPTEUR DE FRICTION

(30) Priority: 30.07.2009 BE 200900464
(43) Date of publication of application: 06.06.2012
(73) Proprietor: CNH Industrial Belgium nv, 8210 Zedelgem (BE)
(72) Inventor: VANDE RYSE, Johan A.E., B-8000 Brugge (BE)
(74) Representative: CNH Industrial IP Department
(86) International application number: PCT/EP2010/060436
(87) International publication number: WO 2011/012487

(56) References cited:
- FR-A1- 2 360 413
- US-A- 4 034 543
- US-A- 4 106 267
- US-A- 4 750 418

## Description

### Technical Field

The present invention relates to agricultural balers for the formation of square bales of crop material, such as hay, straw or silage in a bale chamber.

### Background Art

In a conventional baler, as shown for example in US Patent 4,106,267, hay, straw, silage or similar crop material that has been previously cut, windrowed or swathed, is picked up from the ground by a pick-up unit, fed into an intake duct by a packer unit and loaded in successive batches or charges into an elongated bale chamber by tines of a stuffer unit in timed sequence with a reciprocating plunger. The plunger compresses the material into bales and, at the same time, gradually advances the bales towards the outlet of the bale chamber. As the bales reach a predetermined length as determined by a metering device, a knotter device is actuated which wraps cord, twine or other flexible binding material around the bale and secures the ends of the binding material together. Instead of a packer it is also known to for example use a rotor cutter that chops the crop material in smaller pieces.

The packer unit or rotor cutter pre-compresses the crop material in the pre-compression chamber against a backstop formed by the plunger, when closing off the entrance of the bale chamber. The stuffer unit is designed to transfer charges of the crop material quickly into the bale chamber within the short interval during which the reciprocating plunger clears the entrance of the bale chamber. Typically this is accomplished by a fork assembly of which the arms are rotatably connected to cranks, the arms being provided with longitudinally extending slots in which stationary journals are received. A uniform revolution of the cranks makes the arms shift along and pivot about the journals so that the tines of the fork travel along a generally kidney-shaped path with a varying speed. The maximum or peak speed is obtained when the distance between the connection to the cranks and the stationary journals reaches its minimum, since the or peak speed is obtained when the distance between the connection to the cranks and the stationary journals reaches its minimum, since the arms then act as levers with very close fulcrum points. Such a system permits a quick sweep of the material behind the packer unit through the duct and to the entrance of the bale chamber.

FR 2 360 413 describes an agricultural baler having a hydraulic system for regulating the pressure exerted on the movable top door. A friction detector is positioned in the side wall of the baling chamber which will control the flow of fluid to the hydraulic cylinders of the hydraulic system.

This type of stuffer unit was originally designed for the baling of dry, low density material such as straw or hay, but meanwhile there has been an important shift in agriculture from the use of hay to the use of silage. Silage grass can also be baled, but since it has a higher humidity and a higher density than the other crop materials, the load on the components of the stuffer unit increases accordingly.

A stuffer overload protection will be activated for example when a plug of crop material is formed in the baling chamber, especially during the baling of silage. A conventional protection is the use of a shear bolt assembly in the drive line of the stuffer unit. When the loads exceed the shear force of the bolt, the stuffer is disconnected before its components are damaged. The shear bolt can be replaced relatively easy, but in some cases it will not be possible to resume the normal operation of the baler as the stuffer will not be capable to remove the crop material from the pre-compression chamber without activating the overload protection. In this case it will cost the operator valuable time to render the baler operable again, because it may also be required to clear the duct manually before the baler can be restarted. Furthermore this is a job that requires extensive safety measures and it is very difficult to gain access to the intake duct of the pre-compression chamber.

### Disclosure of Invention

The present invention seeks therefore to provide assistance to the operator of the baler to help reduce the risk of stuffer overload.

According to the present invention, there is provided a square baler having a baling chamber, an intake duct leading into the baling chamber, a stuffer for transferring slices of crop in the intake duct into the baling chamber, and a sensor for producing a signal indicative of the frictional properties of the crop, characterised in that the sensor is provided in the baling chamber and/or the intake duct for producing an electrical output signal indicative of the frictional properties of the crop, and in that a control system is provided including means for predicting the load on the stuffer based on the signal indicative of crop friction and other measured crop parameters.

The load on the stuffer varies with many parameters of the crop, such as the type of crop (grass, hay etc.), the crop density in the intake duct and the crop moisture content. These parameters all affect the weight of the material that is to be transferred from the intake duct into the baling chamber. The present invention provides a sensor that allows the operator or an automatic control system to take this factor into consideration, in order that stuffer overload may be avoided.

In different implementations, the control system may simply warn the vehicle operator of a danger of stuffer overload, it may suggest different settings to the operator to avoid imminent stuffer overloads or it may automatically change operating parameters and settings of the baler to prevent stuffer overloads.

In one embodiment of the invention, the sensor comprises a pad arranged in a wall of the baling chamber, means for urging the pad against the crop with a force independent of the compression of the crop within the baling chamber and means for measuring the drag on the pad when the crop is advanced by the plunger associated with the baling chamber.

In this embodiment, the force required to allow drag to be measured is provided by the plunger which advances the crop at regular intervals in the baling chamber. Mounting of the sensor in the baling chamber not only takes advantage of the crop movement occasioned by the plunger but also provides regular readings that can be analysed to avoid spurious measurements and to detect erratic operation of the sensor.

The drag can be measured by any suitable device capable of determining the lateral frictional force acting the pad. For example, one may measure movement of the pad in the same direction as the crop against the resistance of a spring, or the bending strain on a shaft on which the pad is mounted.

If the sensor is mounted in a position, such as the intake duct, where compressed crop is not advanced at regular intervals relative to the sensor, it possible to adopt an alternative design of sensor in which the drag on a pad is measured while the pad is moved or vibrated relative to the crop at the same time as the pad is being urged against the crop with constant force.

The details of the design of the friction measuring sensor are not of fundamental importance as long as its output signal can be used to indicate or estimate the resistance experienced by the stuffer due to the frictional forces acting between the crop and the intake duct.

### Brief Description of Drawings

The invention will now be described further, by way of example, with reference to the accompanying drawings, in which :
- Figure 1 is a schematic representation the baling chamber of a square baler of the invention, and
- Figure 2 is a section in the plane II-II in Figure 1.

### Mode(s) for Carrying Out the Invention

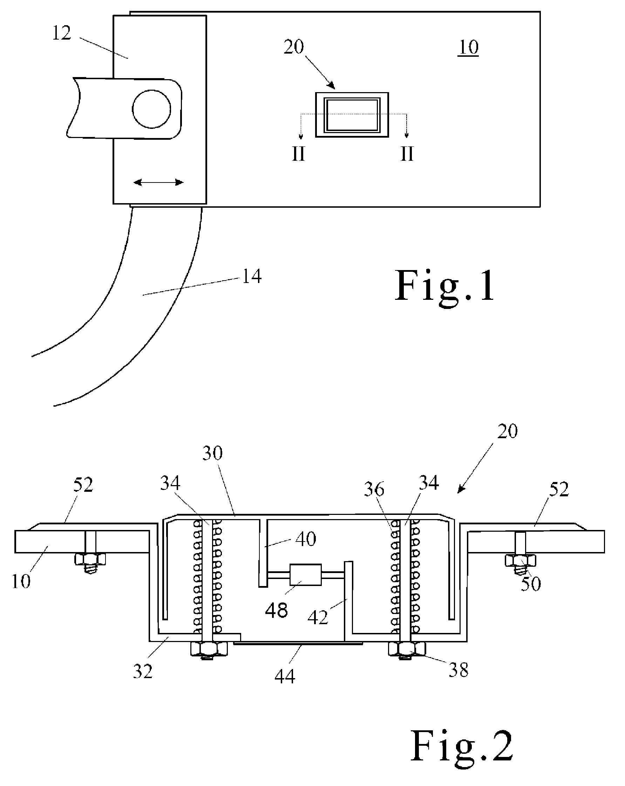

Figure 1 shows a baling chamber 10 of a square baler. The baling chamber 10 is open at the right hand end as viewed, this being the end from which the formed bales are discharged. At the left hand end, the baling chamber is closed by a reciprocating plunger 12. In its illustrated advanced position, the plunger 12 overlies an opening in the bottom wall of the baling chamber 10 that communicates with an intake or precompression duct 14.

Crop picked up from a field is precompressed in the duct 14 by a packer or a rotor cutter to form a slice. The plunger then commences a cycle during which it first moves to the left as viewed to uncover the end of the intake duct 14. A stuffer next transfers the precompressed slice from the intake duct 14 to the baling chamber, after which the plunger 12 again moves to the right to compress the slice further and to block the end of the intake duct 14 so that the next slice can be formed in the duct 14.

The plunger 12 presses the first slice of a newly formed bale against the back end of the last completed and knotted bale that has yet to be ejected from the baling chamber. Therefore, at all times during the baling operation there is present in the baling chamber 10 a fully or partly formed bale that contacts its side walls and that slides incrementally from left to right as viewed towards the discharge end of the baler.

As so far described, the baler shown in Figure 1 is entirely conventional. Its novelty resides in the provision of a friction sensor 20, which is shown in section in Figure 2.

The stuffer unit that transfers the precompressed slices of crop from the intake duct 14 into the baling chamber 10 can be overloaded if an excessive mass of crop is allowed to accumulate in the intake duct. However, it is not only the mass of crop in the slice that determines the load on the stuffer but also the frictional drag which varies with such parameters as the type of crop and its moisture content. By providing a friction sensor 20, the present invention allows the frictional drag factor to be taken into consideration in deciding when to commence a transfer of a slice from the intake duct 14 into the baling chamber 10.

The friction sensor comprises a pad 30 that is mounted in a housing 32 and lies generally flush with the inner wall of the baling chamber 10. The pad 30 is urged against the bale with a constant force that does not depend on the degree of compression of the crop material in the bale and is free to move with the bale relative to its housing as a result of friction. The coefficient of friction of the crop is measured by the drag on the pad.

Numerous ways present themselves for urging the pad 30 with a constant force against the crop, for mounting the pad in the housing so that it is free to be moved when it is frictionally engaged by the crop and for measuring the drag force acting to move the pad relative to its housing. Figure 2 shows schematically, and only be way of example, one way in which this can be achieved.

The pad 30 in Figure 2 is connected to four guide rods 34 surrounded by springs 36 sufficiently weak to be compressed by the bale so that force between the pad 30 and the bale is dictated by the springs 36, not by the degree of compression of the crop material in the bale. The guide rods pass through elongated slots in the housing 32 to permit the pad 30 to move from left to right as viewed. Nuts 38 on threaded ends of the rods 34 serve to limit the extent that the pad 30 can project into the path of the bales. It will also be noted that the ends of the pad 30 are rounded or ramped to ensure that the pad 30 does not snag on a bale.

To measure the drag force, the sensor in Figure 2 comprises a load cell 48 secured between a first flange 40 on the pad 30 and a second flange 42 on the housing 32. A hole in the housing 32 covered by a cover 44 provided access for mounting the load cell 48. The sensor 20 is held in the wall of baling chamber by bolts 50 projecting from the rear face of a bezel 52 surrounding the pad 30 and formed integrally with the housing 32.

Each time that a bale is pushed by the plunger 12 past the sensor 20, the pad 30 will experience a drag force and the load cell 48 will produce an electrical output signal that is independent of the degree of compression of the bale and indicative only of the frictional properties of the crop material. These output signals of the load sensor 48 can be averaged over several plunger cycles for improved accuracy and consistency.

The signal indicative of crop friction may merely be displayed to the operator. The operator may then manually compensate for friction by modifying the maximum mass that is allowed to accumulate in the intake duct 14 before a stuffer cycle is commenced.

It is preferred however according to the invention for the signal to be used, in combination with other measured crop parameters, by a control system to predict the load on the stuffer.

The control system may simply warn the vehicle operator of a danger of stuffer overload, it may suggest different settings to the operator to avoid imminent stuffer overloads or it may automatically change operating parameters and settings of the baler to prevent stuffer overloads.

According to an alternative embodiment the sensor can be arranged in the intake duct en the sensor can determine the friction of the crop at the moment that the stuffer transfers the crop through the intake duct into the baling chamber.

It is not necessary for the sensor to be mounted in a position where compressed crop is advanced at regular intervals relative to the sensor. If mounted in a position where the crop is stationary, the sensor measure the drag on a pad that is moved or vibrated relative to the crop at the same time as the sensor is being urged against the crop with constant force. In this way the sensor can, when it is arranged in the intake duct, already determine the friction of the crop before it is moved by the stuffer at the moment it is being collected in the intake duct.

The invention as defined by the claims is not limited to the embodiments as described and shown in the drawings, but can equally comprise combinations and variations that fall within the scope of the claims.

## Claims

1. A square baler having a baling chamber (10), an intake duct (14) leading into the baling chamber, a stuffer for transferring slices of crop in the intake duct (14) into the baling chamber (10), and a sensor (20) for producing a signal indicative of the frictional properties of the crop, **characterised in that** the sensor (20) is provided in the baling chamber (10) and/or the intake duct (14) for producing an electrical output signal indicative of the frictional properties of the crop, and **in that** a control system is provided including means for predicting the load on the stuffer based on the signal indicative of crop friction and other measured crop parameters.

2. A square baler as claimed in claim 1, **characterised in that** means are provided for displaying the signal indicative of crop friction to the baler operator.

3. A square baler as claimed in claim 1 or 2, **characterised in that** the control system is operative only to warn the vehicle operator of a danger of stuffer overload.

4. A square baler as claimed in claim 1 or 2, **characterised in that** the control system is operative to suggest different settings to the operator to avoid imminent stuffer overload.

5. A square baler as claimed in claim 1 or 2, **characterised in that** the control system is operative to change operating parameters and settings of the baler automatically to prevent stuffer overload.

6. A square baler as claimed in any preceding claim, **characterised in that** the sensor (20) comprises a pad (30) arranged in a wall of the baling chamber or the intake duct (14) respectively, means for urging the pad (30) against the crop with a force independent of the compression of the crop within the baling chamber or the intake duct (14) and means (48) for measuring the drag on the pad (30) when the crop is advanced by the plunger associated with the baling chamber or the stuffer associated with the intake duct (14).

7. A square baler as claimed in any one of claims 1 to 5, **characterised in that** the sensor (20) comprises a pad (30), means of moving or vibrating the pad (30) relative to the crop at the same time as the pad (30) is urged against the crop with constant force and means (48) for measuring the drag on the pad (30).

## Patentansprüche

1. Eine Rechteckballenpresse mit einer Ballenpresskammer (10), einem Aufnahmekanal (14), der in die Ballenpresskammer führt, einem Stopfer zur Überführung von Erntematerial-Scheiben in dem Aufnahmekanal (14) in die Ballenpresskammer (10), und mit einem Sensor (20) zur Erzeugung eines Signals, das die Reibungseigenschaften des Erntematerials darstellt, **dadurch gekennzeichnet, dass** der Sensor (20) in der Ballenpresskammer (10) und/oder dem Aufnahmekanal (14) vorgesehen ist, um ein elektrisches Ausgangssignal zu erzeugen, das die Reibungseigenschaften des Erntematerials anzeigt, und dass ein Steuersystem vorgesehen ist, das eine Einrichtung zur Vorhersage der Last auf den Stopfer auf der Grundlage des Signals einschließt, das die Erntematerial-Reibung und andere gemessene Erntematerial-Parameter anzeigt.

2. Eine Rechteckballenpresse nach Anspruch 1, **dadurch gekennzeichnet, dass** Einrichtungen zur Darstellung des die Erntematerial-Reibung anzeigenden Signals an den Betreiber der Ballenpresse vorgesehen sind.

3. Eine Rechteckballenpresse nach Anspruch 1 oder 2, **dadurch gekennzeichnet, dass** das Steuersystem lediglich zur Warnung des Fahrzeug-Betreiber vor der Gefahr einer Stopfer-Überlast wirksam ist.

4. Eine Rechteckballenpresse nach Anspruch 1 oder 2, **dadurch gekennzeichnet, dass** das Steuersystem betreibbar ist, um dem Betreiber unterschiedliche Einstellungen zur Vermeidung einer drohenden Stopfer-Überlast vorzuschlagen.

5. Eine Rechteckballenpresse nach Anspruch 1 oder 2, **dadurch gekennzeichnet, dass** das Steuersystem betreibbar ist, um die Betriebsparameter und Einstellungen der Ballenpresse automatisch zu ändern, um eine Stopfer-Überlast zu verhindern.

6. Eine Rechteckballenpresse nach irgendeinem der vorhergehenden Ansprüche, **dadurch gekennzeichnet, dass** der Sensor (20) eine Auflageplatte (30), die in einer Wand der Ballenpresskammer oder des Aufnahmekanals (14) angeordnet ist, Einrichtungen zum Drücken der Auflageplatte (30) gegen das Erntematerial mit einer Kraft, die unabhängig von der Kompression des Erntematerials innerhalb der Ballenpresskammer oder des Aufnahmekanals (14) ist, und Einrichtungen (48) zum Messen der Widerstandskraft auf die Auflageplatte (30) umfasst, wenn das Erntematerial durch den der Ballenpresskammer zugeordneten Presskolben oder den dem Aufnahmekanal (14) zugeordneten Stopfer vorwärts bewegt wird.

7. Eine Rechteckballenpresse nach irgendeinem der Ansprüche 1 bis 5, **dadurch gekennzeichnet, dass** der Sensor (20) eine Auflageplatte (30), Einrichtungen zum Bewegen oder in Schwingungen versetzen der Auflageplatte (30) gegenüber dem Erntematerial zu der gleichen Zeit, zu der die Aufnahmeplatte (30) mit einer konstanten Kraft gegen das Erntematerial gedrückt wird, und Einrichtungen (48) zur Messung der Widerstandskraft auf die Aufnahmeplatte (30) umfasst.

## Revendications

1. Ramasseuse-presse à balles carrées comportant une chambre de compression (10), un conduit d'admission (14) menant dans la chambre de compression, un dispositif de bourrage pour transférer les tranches de produit récolté dans le conduit d'admission (14) dans la chambre de compression (10), et un capteur (20) destiné à produire un signal caractéristique des propriétés frictionnelles du produit récolté, **caractérisée en ce que** le capteur (20) est placé dans la chambre de compression (10) et/ou le conduit d'admission (14) pour produire un signal électrique caractéristique des propriétés frictionnelles du produit récolté, et **en ce qu'**un système de commande est prévu et inclut un moyen pour estimer la charge sur le dispositif de bourrage sur la base du signal caractéristique de la friction du produit récolté et d'autres paramètres du produit récolté mesurés.

2. Ramasseuse-presse à balles carrées selon la revendication 1, **caractérisé en ce qu'**un dispositif est prévu pour afficher le signal caractéristique de la friction du produit récolté au conducteur de la ramasseuse-presse à balles.

3. Ramasseuse-presse à balles carrées selon la revendication 1 ou 2, **caractérisé en ce que** le système de commande est fonctionnel uniquement pour avertir le conducteur du véhicule d'un risque de surcharge du dispositif de bourrage.

4. Ramasseuse-presse à balles carrées selon la revendication 1 ou 2, **caractérisé en ce que** le système de commande est fonctionnel pour proposer différents réglages au conducteur afin d'éviter une surcharge prochaine du dispositif de bourrage.

5. Ramasseuse-presse à balles carrées selon la revendication 1 ou 2, **caractérisé en ce que** le système de commande est fonctionnel pour modifier automatiquement les paramètres et les réglages de fonctionnement de la ramasseuse-presse à balles pour empêcher une surcharge du dispositif de bourrage.

6. Ramasseuse-presse à balles carrées selon l'une quelconque des revendications précédentes, **caractérisé en ce que** le capteur (20) comprend un coussinet (30) disposé dans une paroi de la chambre de compression ou du conduit d'admission (14), un moyen pour pousser le coussinet (30) contre le produit récolté avec une force indépendante de la compression du produit récolté dans la chambre de compression ou le conduit d'admission (14) et un moyen (48) pour mesurer le traînage sur le coussinet (30) lorsque le produit récolté est poussé par le piston associé à la chambre de compression ou le dispositif de bourrage associé au conduit d'admission (14).

7. Ramasseuse-presse à balles carrées selon l'une quelconque des revendications précédentes 1 à 5, **caractérisé en ce que** le capteur (20) comprend un coussinet (30), un moyen pour déplacer ou faire vibrer le coussinet (30) par rapport au produit récolté au même moment que le coussinet (30) est poussé contre le produit récolté avec une force constante et un moyen (48) pour mesurer le traînage sur le coussinet (30).
